# EUROPEAN PATENT SPECIFICATION

(11) **EP 3 263 362 B1**
(45) Date of publication and mention of the grant of the patent: **13.10.2021**
(21) Application number: 16761710.9
(22) Date of filing: 07.03.2016
(51) Int. Cl.: B60C 9/04, B60C 9/02, B29D 30/16

(54) **PNEUMATIC TIRE**
LUFTREIFEN
PNEUMATIQUE

(30) Priority: 11.03.2015 JP 2015047849
(43) Date of publication of application: 03.01.2018
(73) Proprietor: Sumitomo Rubber Industries, Ltd., Kobe-shi, Hyogo 651-0072 (JP)
(72) Inventor: KOHARA Kei, Kobe-shi Hyogo 651-0072 (JP)
(74) Representative: Manitz Finsterwald Patent- und Rechtsanwaltspartnerschaft mbB
(86) International application number: PCT/JP2016/056997
(87) International publication number: WO 2016/143742

(56) References cited:
- EP-A1- 2 810 792
- WO-A2-2014/135995
- JP-A- H05 238 203
- JP-A- H05 246 207
- JP-A- 2009 113 591
- JP-A- 2010 208 090
- JP-A- 2012 086 534

## Description

### [Technical Field]

The present invention relates to a pneumatic tire capable of suppressing occurrence of poor appearance.

### [Background Art]

For example, Patent Literature 1 listed below has disclosed a method for manufacturing a pneumatic tire having a rigid core. The rigid core has an outer surface substantially corresponding to a shape of a surface of a cavity of the tire. On the outer surface of the rigid core, rectangular sheet-like ply pieces are sequentially stuck in a tire circumferential direction. Thereby, a toroidal carcass ply is formed. Thereafter, other tire components are attached to form a green tire. The green tire is vulcanized together with the rigid core. According to such a manufacturing method, the carcass ply is not expanded and deformed.

Length in a tire radial direction of each of the ply pieces is greater than a length thereof in the tire circumferential direction. Further, each of the ply pieces is provided with a plurality of carcass cords arranged along a longitudinal direction of the ply piece, i.e. the radial direction, and substantially in parallel with each other. The carcass cords have same diameters and are arranged with equal pitches therebetween in the tire circumferential direction.

The pneumatic tire formed by the above manufacturing method has a uniform carcass cord spacing so as to provide excellent uniformity as compared with a conventional method (including, for example, a step of expanding and deforming a cylindrical carcass ply to form a toroidal shape). Thereby, it is possible that uniformity of the tire is improved.

Patent Literature 1: Japanese Unexamined Patent Application Publication No. 2014-069335

Pneumatic tires comprising at least one carcass ply comprising a plurality of ply pieces arranged in a tire circumferential direction are known from documents WO 2014/135995 A2, JP 2012 086534 A and JP 2010 208090 A. Document EP 2 810 792 A1 discloses a tire comprising a carcass with a carcass ply comprising a plurality of ply pieces. Each of the ply pieces comprises a plurality of carcass cords, wherein diameters of carcass cords on side edge portions of the ply pieces are equal to diameters of carcass cords on a center portion of the ply pieces.

### [Summary of the invention]

### Problems to be solved by the Invention

By the way, the outer surface of the rigid core has a larger length in the tire circumferential direction in a part on which a tread portion is formed than in a part on which bead portions are formed. In order to cancel such a difference in length, the ply pieces adjacent in the tire circumferential direction are overlapped in areas between sidewall portions and bead portions. In overlapping portions of the ply pieces configured as such, code density of the carcass cords is high, therefore, rigidity of the carcass ply is increased. Due to such portions of the carcass having high rigidity, it is possible that poor appearance such as a dent (depression) occurs on an outer surface of the tire when the tire is inflated. Especially, poor appearance tends to occur in the sidewall portions where rubber volume is small.

The present invention was made in view of the above, and a primary object thereof is to provide a pneumatic tire capable of suppressing poor appearance as described above.

### Means for Solving the Problems

According to the present invention, a carcass comprising at least one carcass ply extending between bead portions via sidewall portions and a tread portion, the at least one carcass ply comprising a plurality of ply pieces arranged in a tire circumferential direction wherein each of the ply pieces is longer in a tire radial direction than in the tire circumferential direction, at least a part of the ply pieces adjacent to each other in the tire circumferential direction are overlapped with each other, each of the ply pieces comprising a plurality of carcass cords arranged along the tire radial direction and in parallel with each other, each of the ply pieces comprising side edge portions disposed on both sides in the tire circumferential direction and a center portion disposed between the side edge portions, and a plurality of the carcass cords arranged in the side edge portions having a diameter (Ce) smaller than diameters (Cc) of the carcass cords arranged in the center portion.

In a tire according to the invention, the carcass cords arranged in both of the side edge portions of each of the ply pieces have the diameters (Ce) smaller than the diameters (Cc) of the carcass cords arranged in the center portion of each of the ply pieces.

In a tire according to the invention, in the side edge portions, a plurality of carcass cords having a smaller diameter (Ce) is arranged.

In a preferred embodiment of the tire, a ratio Cc/Ce of the diameters (Cc) and (Ce) may be in a range of from 1.2 to 2.0.

In another preferred embodiment of the tire, an average of the diameters (Ce) of three carcass cords arranged closest to side edges in the side edge portions may be smaller than an average of the diameters (Cc) of the carcass cords other than the three carcass cords.

In a tire according to the invention, the side edge portions include a plurality of the carcass cords and the diameters (Cc) of the carcass cords arranged therein gradually increase from side edges of the ply pieces to the center portion.

In another preferred embodiment of the tire, each of the ply pieces may include a plurality of the carcass cords arranged in at least one of the side edge portions, and
pitches (Pe) between the carcass cords arranged in the at least one of the side edge portions may be larger than pitches (Pc) between the carcass cords arranged in the center portion.

In another preferred embodiment of the tire, each of the ply pieces may have the pitches (Pe) between the carcass cords arranged in both of the side edge portions larger than the pitches (Pc) of the carcass cords arranged in the center portion.

In another preferred embodiment of the tire, an average of the pitches (Pe) of three carcass cords arranged closest to side edges of the side edge portions may be larger than an average of the pitches (Pc) of the carcass cords other than the three carcass cords.

In another preferred embodiment of the tire, the side edge portions may include a plurality of the carcass cords and the pitches (Pe) of the carcass cords may gradually decrease from the side edges of the ply pieces to the center portion.

### Effects of the Invention

The pneumatic tire according to the invention comprises a carcass including at least one carcass ply extending between bead portions via sidewall portions and a tread portion. The carcass ply includes a plurality of ply pieces arranged in a tire circumferential direction wherein each of the ply pieces is longer in a tire radial direction than in the tire circumferential direction. At least a part of the ply pieces adjacent to each other in the tire circumferential direction are overlapped with each other. According to such an overlapping portion, a toroidal carcass ply is formed while occurrence of wrinkles being suppressed.

Each of the ply pieces includes a plurality of carcass cords arranged along the tire radial direction in parallel with each other. Each of the ply pieces includes side portions disposed on both sides in the tire circumferential direction and a center portion disposed between the side portions. A plurality of the carcass cords arranged in the side edge portions has a diameter (ce) smaller than diameters (Cc) of the carcass cords arranged in the center portion. Accordingly, the carcass cords having relatively small diameters are arranged in the side edge portions of the ply pieces. Therefore, it is possible that the rigidity is suppressed from excessively increasing in overlapping portions formed by overlapping side edge portions. Thus, difference in rigidity between the overlapping portions and the other portions becomes small, therefore, it is possible to uniformly expand the carcass ply when the tire is inflated. Thereby, it is possible that occurrence of a bulge and/or a dent is prevented.

### [Brief Description of the Drawings]

Fig. 1 is a perspective view of a pneumatic tire as an embodiment of the present invention.
Fig. 2 is a perspective view illustrating a process of forming a carcass ply by using a rigid core.
Fig. 3 is a perspective view of a ply piece as an embodiment not forming part of the present invention.
Fig. 4 is a cross-sectional view of the ply piece of Fig. 3.
Fig. 5 is a cross-sectional view of a ply piece as an embodiment of the present invention.
Fig. 6 is a cross-sectional view of a ply piece as another embodiment not forming part of the present invention.
Fig. 7 is a cross-sectional view of a ply piece as yet another embodiment not forming part of the present invention.
Fig. 8 is a cross-sectional view of a conventional ply piece.

### [Description of Reference Signs]

- 2: tread portion
- 6: carcass
- 6A: carcass ply
- 11: ply piece
- 12: carcass cord
- 11c: center portion
- 11e: side edge portions

### [Description of the Preferred Embodiments]

An embodiment of the present invention will now be described in detail.

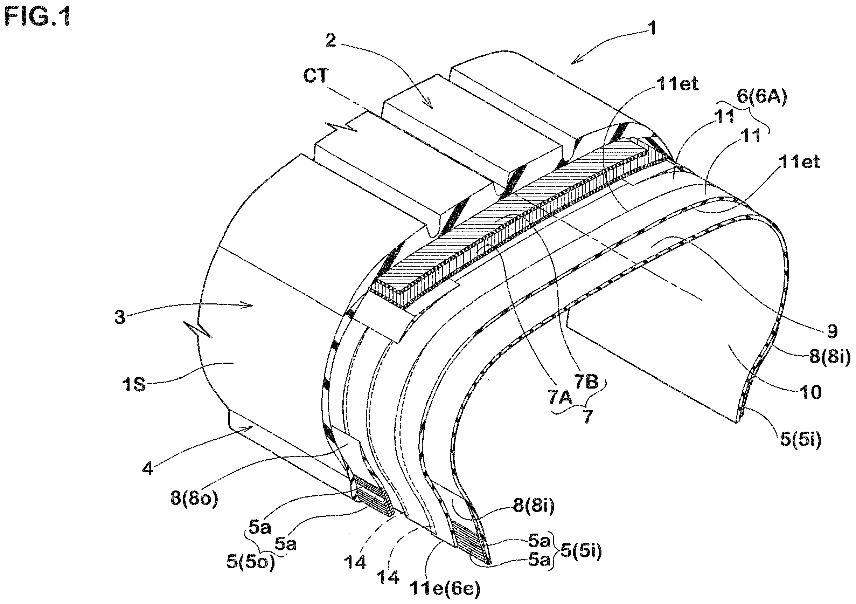

Fig. 1 is a perspective view showing a pneumatic tire 1 in this embodiment. The tire 1 in this embodiment is configured as a tire for a passenger car. The tire 1 includes a carcass 6 extending between bead cores 5 of bead portions 4 via sidewall portions 3 and a tread portion 2, and a belt layer 7 provided on an outer side of the carcass 6 in a tire radial direction and inside of the tread portion 2. Further, an inner liner rubber 9 forming an inner cavity surface 10 of the tire 1 is provided on an inner side of the carcass 6.

The carcass 6 in this embodiment comprises at least one (one in this embodiment) carcass ply 6A, for example. The carcass ply 6A is provided with carcass cords arranged at an angle in a range of from 75 to 90 degrees, for example, with respect to a tire equator CT. The carcass ply 6A in this embodiment extends in a toroidal manner between the bead portions 4. The carcass ply 6A in this embodiment includes inner ends 6e in the tire radial direction terminating without being turned up in the bead portions 4. For example, organic fiber cords such as polyester or steel cords are used as the carcass cords.

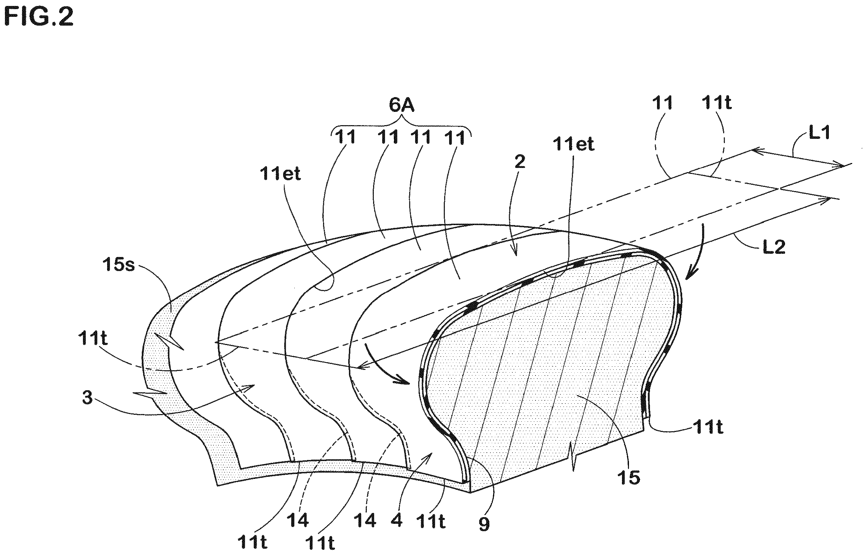

Fig. 2 is a perspective view illustrating a process of forming the carcass ply 6A by using a rigid core. The carcass ply 6A is formed by arranging rectangular ply pieces 11 in the tire circumferential direction. Lengths L2 in the tire radial direction of the ply pieces 11 are larger than lengths L1 thereof in the tire circumferential direction. The length L2 in the tire radial direction of the ply piece 11 means a length thereof orthogonal to the tire circumferential direction along the ply piece 11. Note that the lengths L1 in the tire circumferential direction and the lengths L2 in the tire radial direction can be appropriately determined according to, for example, a size or the like of the tire 1. The lengths L1 in this embodiment in the tire circumferential direction is set to be in a range of, for example, about from 24 to 34 mm. Further, the lengths L2 in the tire radial direction is set to be in a range of, for example, about from 300 to 500 mm.

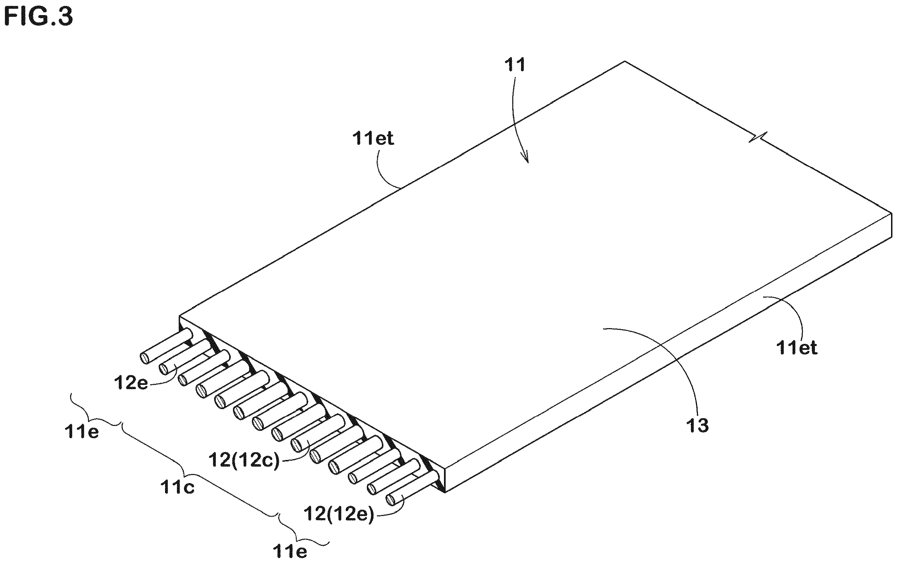

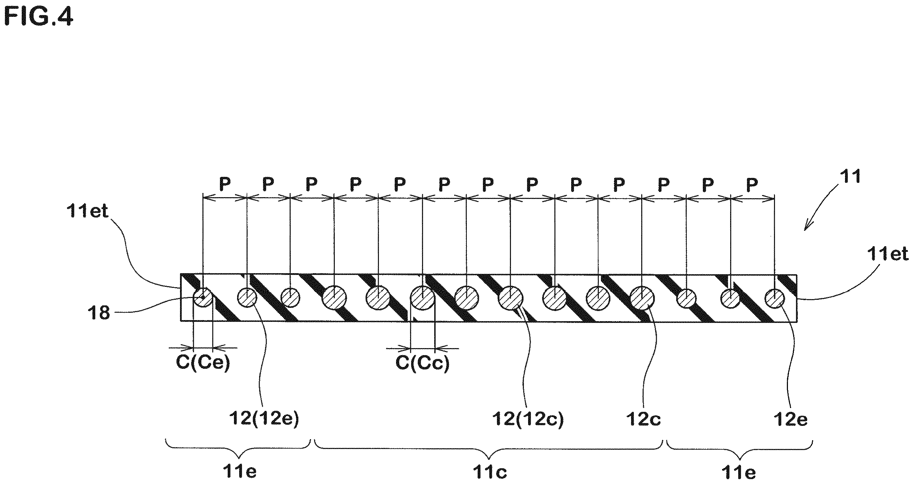

Fig. 3 is a perspective view of the ply piece 11, in an embodiment which is not according to the present invention. Fig. 4 is a cross-sectional view of the ply piece 11 of Fig. 3. The ply piece 11 includes a plurality of carcass cords 12 arranged along a longitudinal direction thereof, i.e. the radial direction, and in parallel with each other, and an unvulcanized topping rubber 13 covering the carcass cords 12. Here, the term "unvulcanized" includes all states that have not reached complete vulcanization, and so-called semi-vulcanized state is included in this "unvulcanized".

The carcass cords 12 in this embodiment are arranged at equal pitches in the tire circumferential direction. As shown in Fig. 4, pitches (P) in the tire circumferential direction of the carcass cords 12 can be appropriately determined based on performances required of the tire 1 (shown in Fig. 1). The pitches (P) in this embodiment are set to be in a range, for example, about from 0.8 to 1.8 mm. Note that the pitches (P) are determined by distances between cord centers 18 of the adjacent carcass cords 12 before the ply piece 11 is attached to a rigid core 15 described later.

Referring back to Fig. 1, each of the bead cores 5 is disposed on a side of the inner end 6e of the carcass ply 6A, and configured to include an inner core 5i and an outer core 5o. The inner cores 5i are each disposed on an axially inner side of the carcass ply 6A. The outer cores 5o are each disposed on an axially outer side of the carcass ply 6A. The inner cores 5i and the outer cores 5o are formed, for example, by a single bead wire 5a wound in a spiral shape in the tire circumferential direction.

Each of the bead portions 4 is provided with a bead apex rubber 8. Each of the bed apex rubber 8 includes an inner apex rubber 8i disposed on axially inner side of the inner core 5i and an outer apex rubber 8o disposed on axially outer side of the outer core 5o. The inner apex rubber 8i and the outer apex rubber 8o are formed of hard rubber.

The belt layer 7 comprises two belt plies 7A and 7B. In each of the belt plies 7A and 7B, belt cords are arranged at small angles of, for example, in a range of from 10 to 35 degrees with respect to the tire equator CT. The belt plies 7A and 7B are overlapped so that the belt cords of the belt ply 7A and the belt cords of the belt ply 7B cross each other. For the belt cords, for example, steel cords or fiber cords of organic material such as aramid can be used.

The inner liner rubber 9 extends between the pair of bead portions 4 in the toroidal shape so as to be disposed substantially over the entire area of the inner cavity surface 10. The inner liner rubber 9 is made of a non-air-permeable butyl rubber.

As shown in Fig. 2, the rigid core 15 is used for manufacturing the tire 1 (carcass ply 6A) in this embodiment. The rigid core 15 has an outer surface 15s that substantially corresponds to a shape of the inner cavity surface 10 of the tire 1 shown in Fig. 1. The outer surface 15s of the rigid core 15 has a larger length in the tire circumferential direction in a part on which the tread portion is formed than in a part on which the bead portions are formed.

In this embodiment, in steps of manufacturing an unvulcanized green tire (not shown), the ply pieces 11 are sequentially attached onto the outside of the rigid core 15 in the tire circumferential direction. Thereby, a toroidal carcass ply 6A is formed. The inner liner rubber 9 is disposed in advance between the carcass ply 6A and the rigid core 15. Thereafter, other tire components are attached on outside of the carcass ply 6A, whereby a green tire (not shown) is formed. The green tire is vulcanized together with the rigid core 15. Therefore, in this embodiment, the tire 1 is formed without expanding and deforming the carcass ply 6A.

In the tread portion 2, side edges 11et in the tire circumferential direction of adjacent ones of the ply pieces 11 of the carcass ply 6A are in contact side by side with each other. Further, in other portions than the tread portion 2, such as sidewall portions 3 and the bead portions 4, for example, the ply pieces 11 are each overlapped with adjacent ply pieces 11. Thereby, the carcass ply 6A is provided with overlapping portions 14 each having a substantially triangular shape in side view in which an adjacent pair of the ply pieces 11 is overlapped. According to such overlapping portions, a toroidal carcass ply 6A is formed while occurrence of wrinkles being suppressed.

As shown in Fig. 4, each of the ply pieces 11 has side edge portions 11e provided on both sides in the tire circumferential direction and a center portion 11c arranged between the side edge portions 11e. In each of the ply pieces 11 in this embodiment, diameters (Ce) of the carcass cords 12 arranged in both side edge portions 11e are smaller than diameters (Cc) of the carcass cords 12 arranged in the center portion 11c.

In this specification, diameters (C) of the carcass cords 12 are defined as total fineness (dtex) when the carcass cords 12 are organic fiber cords, and the diameters (C) of the carcass cords 12 are defined as outer diameters (mm) thereof when the carcass cords 12 are metal cords.

The side edge portions 11e in this embodiment are defined as areas of the ply pieces 11 which include closest three carcass cords 12 to the adjacent side edge 11 et (hereinafter may be simply referred to as "side edge carcass cords 12e"). Alternatively, the range of each side edge portion 11e, in other words, the number of carcass cords included in the side edge portion 11e, may be appropriately changed according to the size of the overlapping portion 14 in the tire circumferential direction. The center portion 11c in this embodiment is an area in which the remaining carcass cords 12 (hereinafter may be simply referred to as "center carcass cords 12c") other than the side edge carcass cords 12e are arranged.

The diameter (ce) of each of the side edge carcass cords 12e in this embodiment is set to be the same with each other. The diameter (Cc) of each of the center carcass cords 12c in this embodiment is set to be the same with each other. Each of the carcass cords 12 in this embodiment is made of the same material.

The side edge portions 11e of the ply pieces 11 in this embodiment are provided with the carcass cords 12 having relatively small diameters (Ce). Thereby, it is possible to prevent the rigidity from excessively increasing in the overlapping portions 14 formed by overlapping the side edge portions 11e. Thus, difference in rigidity between the overlapping portions 14 and the other portions becomes small, therefore, it is possible to uniformly expand the carcass ply 6A when the tire 1 (shown in Fig, 1) is inflated. Thereby, it is possible that occurrence of a bulge and/or a dent is prevented. , that which form the overlapping portions 14 (shown in Fig. 2). Thereby, it is possible to prevent the binding force of the carcass ply 6A from partially increasing in the overlapping portions 14 where the code density is partially increased. Therefore, it is possible to suppress variations in the binding force of the carcass ply 6A between the overlapping portions 14 and portions other than the overlapping portions 14, thereby, it is possible that the carcass ply 6A is uniformly expanded when the tire 1 (shown in Fig. 1) is inflated. Thereby, it is possible that occurrence of a bulge and/or a dent is prevented. Further, the center portion 11c where no overlapping portions are formed is provided with the center carcass cords 12c having relatively large diameters, therefore, various performances of the tire 1 including steering stability are maintained.

In the tread portion 2, the ply pieces 11 adjacent in the tire circumferential direction are arranged in contact side by side with each other, therefore, difference in rigidity (binding force) of the carcass ply 6A is generated between the side edge portions 11e and the center portion 11c. However, in the tread portion 2, a tread rubber thicker than the belt plies 7A and 7B and sidewall rubbers is provided on an outer side in the tire radial direction of the carcass ply 6A. Thereby, poor appearance of the tire 1 such as a bulge and/or a dent does not occur in the tread portion 2.

In order to effectively exert the effects of this embodiment, it is preferred that a ratio Cc/Ce of the diameters (Cc) of the center carcass cords 12c and the diameters (Ce) of the side edge carcass cords 12e is set to be in a range of from 1.2 to 2.0. If the ratio Cc/Ce is less than 1.2, it is possible that the partial increase of the binding force of the overlapping portions 14 is not sufficiently prevented. On the contrary, if the ratio Cc/Ce is greater than 2.0, the binding force of the overlapping portions 14 becomes small, therefore, it is possible that a bulge tends to occur at that portion. From this viewpoint, the ratio Cc/Ce is more preferably not less than 1.4, and more preferably not greater than 1.8.

If the carcass cords 12 are organic fiber cords such as nylon cords, rayon cords, or polyester cords, for example, it is preferred that the diameters (total fineness) (Ce) of the side edge carcass cords 12e are set to be in a range of from about 1880 dtex (940 dtex/2) to about 2520 dtex (1260 dtex/2). It is preferred that the diameters (total fineness) (Cc) of the center carcass cords 12c are set to be in a range of from about 2800 dtex (1400 dtex/2) to about 4200 dtex (2100 dtex/2).

If the carcass cords 12 are steel cords, it is preferred that the diameters (Ce) of the side edge carcass cords 12e are set to be in a range of from about 0.59 to about 1.04 mm. It is preferred that the diameters (Cc) of the center carcass cords 12c are set to be in a range of from about 0.87 to about 1.86 mm.

The diameters (Ce) of the side edge carcass cords 12e in this embodiment are set to be the same with each other, and the diameters (Cc) of the center carcass cords 12c in this embodiment are set to be the same with each other. However, the present invention is not limited thereto. As long as an average of the diameters (Ce) of the side edge carcass cords 12e (in this embodiment, three carcass cords 12 arranged closest to at least one of the side edges 11et of each of the ply pieces 11) is larger than an average of the diameters (Cc) of the center carcass cords 12c (in this embodiment, the carcass cords other than the three carcass cords 12 arranged closest to the side edge 11et), the diameter (Ce) of each of the side edge carcass cords 12e may be different from each other, and the diameter (Cc) of each of the center carcass cords 12c may be different from each other, for example. The ply piece 11 configured as such can also prevent the biding force from partially increasing in the overlapping portions 14.

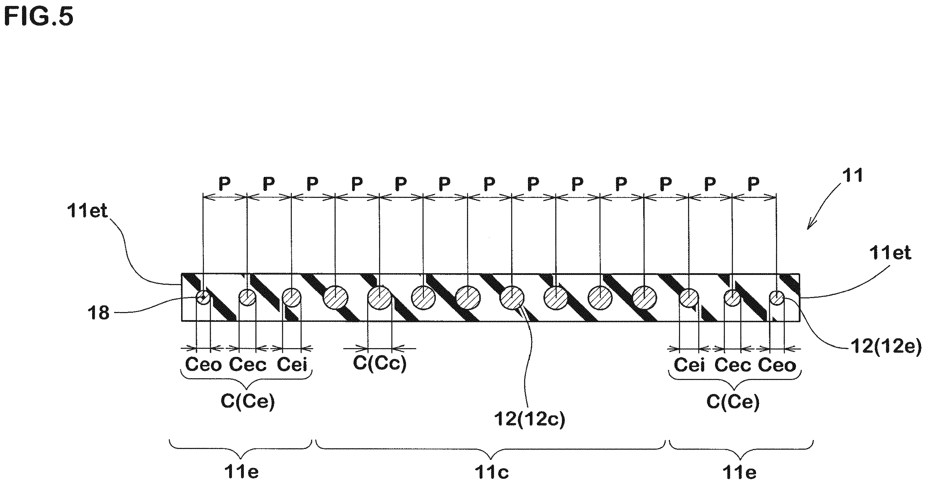

As shown in Fig. 2, each of the overlapping portions 14 in this embodiment is formed in a substantially triangular shape in a side view. Thereby, among the side edge carcass cords 12e, the side edge carcass cord 12e disposed on a side of the center portion 11c has a smaller overlapping ratio than the side edge carcass cords 12e disposed on the sides of the side edges 11et. Thereby, the diameters of the side edge carcass cords 12e gradually increase from the side edges 11et toward the center portion 11c of each of the ply pieces 11. Fig. 5 is a cross-sectional view showing the ply piece 11 according to an embodiment of the present invention.

The diameters (Ce) (a first diameter (Ceo), a second diameter (Cec), a third diameter (Cei) in an order from the side edge 11et) of the side edge carcass cords 12e and the diameters (Cc) of the center carcass cords 12c in this embodiment satisfy the following expression.

### Ceo < Cec < Cei < Cc

The ply pieces configured as such can expand the carcass ply 6A further uniformly when the tire 1 is inflated. In this case, it is preferred that the average of the diameters (Cc) of the center carcass cords 12c is set to be in a range of from 1.2 to 2.0 times the average of the diameters (Ce) of the side edge carcass cords 12e.

In order to effectively exert the above-described effects, it is preferred that the first diameters (Ceo), the second diameters (Cec) or the third diameters (Cei) of the side edge carcass cords 12e are set to be in a range of from 0.6 to 0.8 times the diameters of the carcass cords 12 adjacent thereto on the side of the center portion. Thereby, the diameters (Ce) of the side edge carcass cords 12e increase gradually and smoothly from the side edges 11et toward the center portion 11c of each of the ply piece 11, therefore, it is possible to prevent the variation in the binding force of the side edge portions 11e, thereby, it is possible that occurrence of the poor appearance is further prevented.

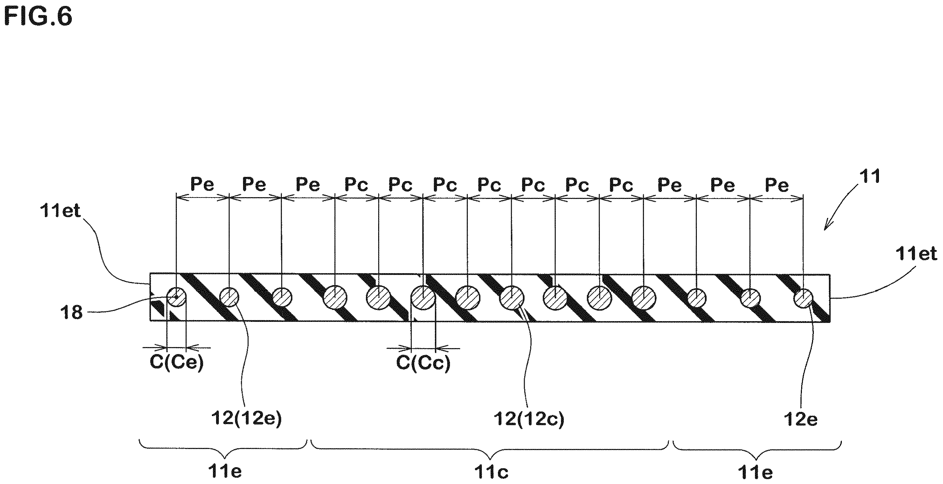

In the carcass plies 6A according to the embodiments described so far, the pitches (P) between the carcass cords 12 are set to be equal. However, the present invention is not limited thereto and the pitches (P) may vary. Fig. 6 is a cross-sectional view showing the ply piece 11 according to yet another embodiment which is not according to the present invention.

The pitches (P) of the side edge carcass cords 12e arranged in the side edge portions 11e are set to be larger than the pitches (Pc) of the center carcass cords 12c of each of the ply pieces 11 in this embodiment. Note that the pitches (Pe) of the side edge carcass cords 12e in the side edge portions 11e are set to be the same. Further, the pitches (Pc) of the center carcass cords 12c in the center portion 11c are set to be the same.

According to the ply pieces 11 configured as such, the carcass cords 12 having the relatively small diameters (Ce) (side edge carcass cords 12e) are arranged in the side edge portions 11e, therefore, it is possible that the code density of the side edge portions 11e is relatively low. According to such an embodiment, the excessive increase in the rigidity of the overlapping portions is prevented further efficiently, therefore, it is possible that occurrence of poor appearance such as a bulge and/or a dent is prevented. On the other hand, pitches (Pc) of the center carcass cords 12c of the center portion 11c where the overlapping portions 14 are not formed are set to be smaller than the pitches (Pe) of the side edge carcass cords 12e, therefore, it is possible that various performances including the steering stability of the tire 1 are prevented from deteriorating.

As described above, the tread portion 2 in this embodiment is provided with the belt plies 7A and 7B and the tread rubber on the outer side in the tire radial direction of the carcass ply 6A, therefore, poor appearance of the tire 1 such as a bulge and/or a dent does not occur.

In order to effectively exert the above effects, a ratio Pe/Po of the pitches (Pe) of the center carcass cords 12c and the pitches (Pe) of the side edge carcass cords 12e is set to be preferably in a range of from 1.2 to 2.0, more preferably in a range of from 1.4 to 1.8.

The pitches (Pe) between the side edge carcass cords 12e in the embodiment shown in Fig. 6 are set to be the same and the pitches (Pc) between the center carcass cords 12c in this embodiment are set to be the same, but the present invention is not limited thereto. For example, as long as the average of the pitches (Pe) of the side edge carcass cords 12e (the three carcass cords 12 arranged closest to each of the side edges 11et of each of the ply pieces 11 in this embodiment) is set to be greater than the average of the pitches (Pc) of the center carcass cords 12c (the carcass cords other than the three carcass cords 12 arranged closest to each of the side edges 11et in this embodiment), the pitches (Pe) of the side edge carcass cords 12e may be different from each other. Further, the pitches (Pc) of the center carcass cords 12c may be different from each other.

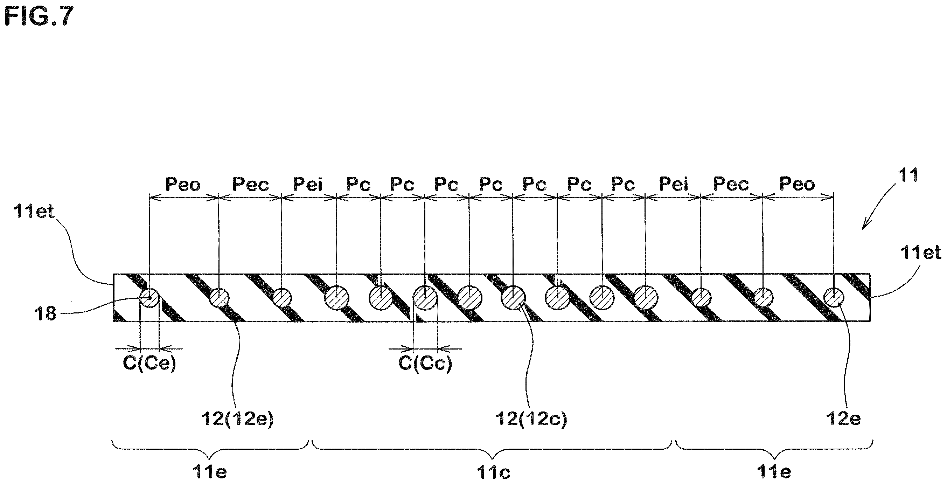

Fig. 7 is a cross-sectional view showing the ply piece 11 according to yet another embodiment which is not according to the present invention. As shown in Fig. 7, the pitches (Pe) of the side edge carcass cords 12e may gradually decrease from the side edges 11et toward the center portion 11c of each of the ply pieces 11. The pitches (Pe) (a first pitch (Peo), the second pitch (Pec), a third pitch (Pei) in an order from the side edge 11et) of the side edge carcass cords 12e and the pitches (Pc) of the center carcass cords 12c in this embodiment satisfy the following expression.

### Peo > Pcc > Pei > Pc

According to such an embodiment, it is also possible that the carcass ply 6A is uniformly expanded when the tire 1 (shown in Fig. 1) is inflated. As a preferred embodiment, it is preferred that the average of the pitches (Pe) of the side edge carcass cords 12e is set to be in a range of from 1.2 to 2.0 times the average of the pitches (Pc) of the center carcass cords 12c.

In order to effectively exert the above-described effects, it is preferred that the pitches (Pe) (the first pitch (Peo), the second pitch (Pec), or the third pitch (Pei) in an order from the side edge 11et) of the side edge carcass cords 12e are set to be in a range of 1.1 to 1.2 times the pitches of the carcass cords 12 adjacent thereto on the side of the center portion 11c. Thereby, it is possible that the pitches (Pe) of the side edge carcass cords 12e decrease gradually and smoothly from the side edges 11et toward the center portion 11c of each of the ply piece 11, therefore, it is possible that occurrence of the poor appearance of the tire 1 is more certainly prevented.

The diameters (Ce) of the side edge carcass cords 12e in this embodiment are set to be the same, but this embodiment is not limited thereto. For example, while the pitches (Pe) of the side edge carcass cords 12e are gradually decreased from the side edges 11et toward the center portion 11c of each of the ply pieces 11, the diameters (Ce) of the side edge carcass cords 12e can be decreased from the side edges 11et toward the center portion 11c of each of the ply pieces 11. Thereby, it is possible that the carcass ply 6A is expanded uniformly when the tire 1 is inflated.

while detailed description has been made of the pneumatic tire as an especially preferred embodiment of the present invention, the present invention can be embodied in various forms without being limited to the illustrated embodiment.

### Working Example

### < Embodiment A >

Tires (examples 1 to 7) having the basic structure shown in Fig. 1 and the ply pieces according to the specifications listed in table 1 were made by way of test and then the test tires were evaluated for appearance thereof. In the tire of Example 7, which is according to the present invention, the diameters (Ce) of the carcass cords arranged in the side edge portions are gradually increased from the side edges toward the center portion of each of the ply pieces.

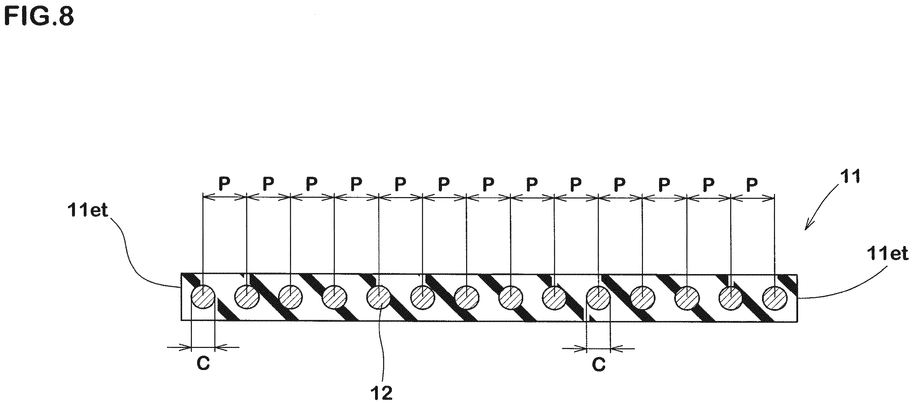

Similarly, References 1 to 6 were also tested. As shown in Fig. 8, the ply pieces in which the diameters of the carcass cords are the same are used for References 1 to 3. The ply pieces in which the diameters (Ce) of the carcass cords arranged on a side of the side edge are larger than the diameters (Cc) of the carcass cords arranged in the center portion are used for References 4 to 6.

The pitches (P) between the carcass cords of each of the Examples and the References are set to be the same. Note that in Example 7 of Table 1, "structure of carcass cords in side edge portion" and "diameters (Ce) of carcass cords in side edge portion" are indicated by an average value of the first diameter (Ceo), the second diameter (Cec), and the third diameter (Cei). Common specifications are as follows.
Tire size: 195/65R15
Rim size: 15x6J
Thickness of Sidewall portion: 1.5 mm
Ply piece:
   Circumferential length L1: 28 mm
   Radial length L2: 390 mm
Carcass cord:
   Material: Polyester
   Pitch (P): 1.3 mm
   Number of carcass cords in side edge portion: 3 The test method is as follows.

### < Appearance of Tire >

Each of the test tires was mounted on the rim, inflated to an inner pressure of 300 kPa, visually checked for poor appearance such as a dent from the sidewall portions to the bead portions, and the appearance of the test tires was evaluated. The evaluation grades are as follows, wherein the tires of the grades S, A, B, C and D do not become a problem in the market.
S: no poor appearance was observed.
A: poor appearance could not be found without a careful touch on the sidewall portion.
B: poor appearance could not be found without a touch on the sidewall portion.
C: poor appearance could not be found by a visual inspection, but could be found relatively easily by touching the sidewall portion.
D: poor appearance could not be found without careful visual inspection of the sidewall portion.
E: poor appearance could be found by visual inspection of the sidewall portion.
F: poor appearance could be easily found by visual inspection of the sidewall portion.

The test results are shown in Table 1.

**Table 1.**

| | Ref.1 | Ref.2 | Ref.3 | Ex.1 | Ex.2 | Ex.3 | Ex.4 | Ex.5 | Ref.4 | Ref.5 | Ref.6 | Ex.6 | Ex.7 |
|---|---|---|---|---|---|---|---|---|---|---|---|---|---|
| Figure showing cross section of ply piece | Fig.8 | Fig.8 | Fig.8 | Fig.4 | Fig.4 | Fig.4 | Fig.4 | Fig.4 | - | - | - | Fig.4 | Fig.5 |
| Side edge portion with carcass cords having smaller diameters than those in center portion | - | - | - | both | both | both | both | both | - | - | - | one | both |
| Structure of carcass cords in center portion [dtex] | - | - | - | 2200/2 | 2200/2 | 2200/3 | 1670/3 | 1670/2 | 1670/2 | 1100/2 | 1100/2 | 1670/2 | 2200/2 |
| Structure of carcass cords in side edge portion [dtex] | - | - | - | 1670/2 | 1100/2 | 1100/2 | 1100/2 | 1100/2 | 2200/2 | 2200/2 | 1670/2 | 1100/2 | 1100/2 |
| Diameters (Cc) of carcass cords in center portion [total fineness dtex] | - | - | - | 4400 | 4400 | 6600 | 5010 | 3340 | 3340 | 2200 | 2200 | 3340 | 4400 |
| Diameters (Ce) of carcass cords in side edge portion [total fineness dtex] | - | - | - | 3340 | 2200 | 2200 | 4400 | 2200 | 4400 | 4400 | 3340 | 2200 | 2200 |
| Ratio Cc/Ce | - | - | - | 1.32 | 2.00 | 3.00 | 1.14 | 1.52 | 0.76 | 0.50 | 0.66 | 1.52 | 2.00 |
| First diameter (Ceo) of carcass cord in side edge portion [total fineness dtex] | - | - | - | - | - | - | - | - | - | - | - | - | 2000 |
| Second diameter (Cec) of carcass cord in side edge portion [total fineness dtex] | - | - | - | - | - | - | - | - | - | - | - | - | 2200 |
| Third diameter (Cei) of carcass cord in side edge portion [total fineness dtex] | - | - | - | - | - | - | - | - | - | - | - | - | 2400 |
| Structure of all carcass cords [dtex] | 2200/2 | 1670/2 | 1100/2 | - | - | - | - | - | - | - | - | - | - |
| Diameters of all carcass cords [total fineness dtex] | 4400 | 3340 | 2200 | - | - | - | - | - | - | - | - | - | - |
| Appearance evaluation [grade]* | D | D | D | B | A | D | C | S | E | F | E | A | S |

| | | | | | | | | | | | | | |
|---|---|---|---|---|---|---|---|---|---|---|---|---|---|
| * S, A, B, C, and D are good. | | | | | | | | | | | | | |

From the test results, it was confirmed that the tires of the examples can suppress occurrence of poor appearance.

### < Embodiment B >

Tires (Examples 4, 8 to 12) having the basic structure shown in Fig. 1 and the ply pieces according to the specifications listed in table 2 were made by way of test and then the test tires were evaluated for appearance thereof in the same manner as the above. In the tire of Example 12, the pitches (Pe) of the carcass cords arranged in the side edge portions are gradually decreased from the side edges toward the center portion of each of the ply pieces. Further, in Example 12 of Table 2, "pitches (Pe) of carcass cords of side edge portions" are indicated by an average value of the first pitch (Peo), the second pitch (Pec), and the third pitch (Pei). The common specifications are the same as those of the above-described embodiment A except for the pitches (P) of the carcass cords and the following items.
Structure of carcass cords in center portion: 1670 dtex/3
Structure of carcass cords in side edge portion: 1100 dtex/2
Diameter (Cc) (total fineness) of carcass cords in center portion: 5010 dtex
Diameter (Ce) (total fineness) of carcass cords in side edge portion: 4400 dtex
Ratio Cc/Ce: 1.14
The test results are shown in Table 2.

**Table 2.**

| | Ex.4 | Ex.8 | Ex.9 | Ex.10 | Ex.11 | Ex.12 |
|---|---|---|---|---|---|---|
| Figure showing cross section of ply piece | Fig.4 | Fig.6 | Fig.6 | Fig.6 | Fig.6 | Fig.7 |
| Side edge portion with carcass cords having smaller diameters than those in center portion | both | both | both | both | both | both |
| Pitches (Pc) of carcass cords in center portion [mm] | - | 1.24 | 1.22 | 1.16 | 1.10 | 1.22 |
| Pitches (Pe) of carcass cords in side edge portion [mm] | - | 1.36 | 1.46 | 1.86 | 2.20 | 1.46 |
| Ratio Pe/Pc | - | 1.10 | 1.20 | 1.60 | 2.00 | 1.20 |
| First pitch (Peo) of carcass cords in side edge portion [mm] | - | - | - | - | - | 1.60 |
| Second pitch (Pec) of carcass cords in side edge portion [mm] | - | - | - | - | - | 1.46 |
| Third pitch (Pei) of carcass cords in side edge portion [mm] | - | - | - | - | - | 1.32 |
| Pitches of all carcass cords [mm] | 1.3 | - | - | - | - | - |
| Appearance evaluation [grade]* | C | B | A | S | A | S |

| | | | | | | |
|---|---|---|---|---|---|---|
| *S, A, B, C, and D are good. | | | | | | |

From the test results, it was confirmed that the tires (Examples 8 to 12) having the ply pieces in which the pitches (Pe) of the carcass cords of the side edge portions are larger than the pitches (Pc) of the carcass cords of the center portion can suppress occurrence of the poor appearance compared with a tire (Example 4) having the ply pieces in which all the pitches (P) of the carcass cords are set to be the same.

## Claims

1. A pneumatic tire (1) comprising:
a carcass (6) comprising at least one carcass ply (6A) extending between bead portions (4) via sidewall portions and a tread portion (2);
the at least one carcass ply (6A) comprising a plurality of ply pieces (11) arranged in a tire circumferential direction wherein each of the ply pieces (11) is longer in a tire radial direction than in the tire circumferential direction;
at least a part of the ply pieces (11) adjacent to each other in the tire circumferential direction are overlapped with each other;
each of the ply pieces (11) comprising a plurality of carcass cords (12) arranged along the tire radial direction and in parallel with each other;
each of the ply pieces (11) comprising side edge portions (11e) disposed on both sides in the tire circumferential direction and a center portion (11c) disposed between the side edge portions (11e); and
a plurality of the carcass cords (12) arranged in the side edge portions (11e) having a diameter (Ce) smaller than diameters (Cc) of the carcass cords (12) arranged in the center portion (11c),
**characterized in that**
the diameters of the carcass cords (12) arranged in the side edge portions (11e) gradually increase from the side edge (11et) to the center portion (11c).

2. The pneumatic tire (1) according to claim 1, wherein
a ratio Cc/Ce of the larger diameters Cc and the smaller diameters Ce of the carcass cords (12) is in a range of from 1.2 to 2.0.

3. The pneumatic tire (1) according to claim 1 or 2, wherein
an average of the diameters (Ce) of three carcass cords (12e) arranged closest to side edges (11et) in the side edge portions (11e) is smaller than an average of the diameters (Cc) of the carcass cords (12) other than the three carcass cords (12e) .

4. The pneumatic tire (1) according to any one of claims 1 to 3, wherein
each of the ply pieces (11) includes a plurality of the carcass cords (12) arranged in at least one of the side edge portions (11e), and
pitches (Pe) between the carcass cords (12) arranged in the at least one of the side edge portions (11e) are larger than pitches (Pc) between the carcass cords (12) arranged in the center portion (11c), wherein the pitches (Pe, Pc) are determined by distances between cord centers (18) of the adjacent carcass cords (12).

5. The pneumatic tire (1) according to claim 4, wherein
each of the ply pieces (11) has the pitches (Pe) between the carcass cords (12) arranged in both of the side edge portions (11e) larger than the pitches (Pc) of the carcass cords (12) arranged in the center portion (11c).

6. The pneumatic tire (1) according to claim 4 or 5, wherein
an average of the pitches (Pe) of three carcass cords (12e) arranged closest to side edges (11et) of the side edge portions (11e) is larger than an average of the pitches (Pc) of the carcass cords (12) other than the three carcass cords (12e).

7. The pneumatic tire (1) according to any one of claims 4 to 6, wherein
the side edge portions (11e) include a plurality of the carcass cords (12), and the pitches (Pe) thereof gradually decrease from a side edge (11et) of the side edge portions (11e) to the center portion (11c).

## Patentansprüche

1. Luftreifen (1), umfassend:
eine Karkasse (6) mit mindestens einer Karkasslage (6A), die sich zwischen Wulstabschnitten (4) über Seitenwandabschnitte und einen Laufflächenabschnitt (2) erstreckt;
wobei die mindestens eine Karkasslage (6A) eine Vielzahl von Lagenstücken (11) umfasst, die in einer Umfangsrichtung des Reifens angeordnet sind, wobei jedes der Lagenstücke (11) in einer radialen Richtung des Reifens länger ist als in der Umfangsrichtung des Reifens;
zumindest ein Teil der in Umfangsrichtung des Reifens nebeneinander liegenden Lagenstücke (11) einander überlappen;
jedes der Lagenstücke (11) eine Vielzahl von Karkasskorden (12) umfasst, die entlang der radialen Richtung des Reifens und parallel zueinander angeordnet sind;
jedes der Lagenstücke (11) Seitenkantenabschnitte (11e), die auf beiden Seiten in der Umfangsrichtung des Reifens angeordnet sind, und einen Mittelabschnitt (11c) umfasst, der zwischen den Seitenkantenabschnitten (11e) angeordnet ist; und
eine Vielzahl der Karkasskorde (12), die in den Seitenkantenabschnitten (11e) angeordnet sind, einen Durchmesser (Ce) aufweisen, der kleiner ist als die Durchmesser (Cc) der Karkasskorde (12), die in dem Mittelabschnitt (11c) angeordnet sind,
**dadurch gekennzeichnet, dass**
die Durchmesser der Karkasskorde (12), die in den Seitenkantenabschnitten (11e) angeordnet sind, von der Seitenkante (11et) zu dem Mittelabschnitt (11c) hin allmählich zunehmen.

2. Luftreifen (1) nach Anspruch 1, wobei das Verhältnis Cc/Ce zwischen den größeren Durchmessern Cc und den kleineren Durchmessern Ce der Karkasskorde (12) in einem Bereich von 1,2 bis 2,0 liegt.

3. Luftreifen (1) nach Anspruch 1 oder 2, wobei ein Durchschnitt der Durchmesser (Ce) von drei Karkasskorden (12e), die am nächsten zu den Seitenkanten (11et) in den Seitenkantenabschnitten (11e) angeordnet sind, kleiner ist als ein Mittelwert der Durchmesser (Cc) der Karkasskorde (12), die nicht die drei Karkasskorde (12e) sind.

4. Luftreifen (1) nach einem der Ansprüche 1 bis 3, wobei
jedes der Lagenstücke (11) eine Vielzahl von Karkasskorden (12) enthält, die in mindestens einem der Seitenkantenabschnitte (11e) angeordnet sind, und
die Teilungsabstände (Pe) zwischen den Karkasskorden (12), die in mindestens einem der Seitenkantenabschnitte (11e) angeordnet sind, größer sind als die Teilungsabstände (Pc) zwischen den Karkasskorden (12), die in dem Mittelabschnitt (11c) angeordnet sind, wobei die Teilungsabstände (Pe, Pc) durch Abstände zwischen Kordmitten (18) der benachbarten Karkasskorde (12) festgelegt sind.

5. Luftreifen (1) nach Anspruch 4, wobei bei jedem der Lagenstücke (11) die Teilungsabstände (Pe) zwischen den Karkasskorden (12), die in beiden Seitenkantenabschnitten (11e) angeordnet sind, größer sind als die Teilungsabstände (Pc) der Karkasskorde (12), die in dem Mittelabschnitt (11c) angeordnet sind.

6. Luftreifen (1) nach Anspruch 4 oder 5, wobei ein Mittelwert der Teilungsabstände (Pe) von drei Karkasskorden (12e), die am nächsten zu den Seitenkanten (11et) der Seitenkantenabschnitte (11e) angeordnet sind, größer ist als ein Mittelwert der Teilungsabstände (Pc) der Karkasskorde (12), die nicht die drei Karkasskorde (12e) sind.

7. Luftreifen (1) nach einem der Ansprüche 4 bis 6, wobei die Seitenkantenabschnitte (11e) eine Vielzahl der Karkasskorde (12) enthalten und deren Teilungsabstände (Pe) von einer Seitenkante (11et) der Seitenkantenabschnitte (11e) zu dem Mittelabschnitt (11c) hin allmählich abnehmen.

## Revendications

1. Bandage pneumatique (1) comprenant :
une carcasse (6) comprenant au moins une nappe de carcasse (6A) s'étendant entre des portions de talon (4) via des portions formant parois latérales et une portion formant bande de roulement (2) ;
ladite au moins une nappe de carcasse (6A) comprenant une pluralité de pièces de nappe (11) agencées dans une direction circonférentielle du pneumatique, dans lequel chacune des pièces de nappe (11) est plus longue dans une direction radiale du pneumatique que dans la direction circonférentielle du pneumatique ;
au moins une partie des pièces de nappe (11) adjacentes les unes aux autres dans la direction circonférentielle du pneumatique se chevauchent les unes les autres ;
chacune des pièces de nappe (11) comprenant une pluralité de câblés de carcasse (12) agencés le long de la direction radiale du pneumatique et en parallèle les uns aux autres ;
chacune des pièces de nappe (11) comprenant des portions formant bord latéral (11e) disposées sur les deux côtés dans la direction circonférentielle du pneumatique, et une portion centrale (11c) disposée entre les portions formant bord latéral (11e) ; et
une pluralité de câblés de carcasse (12) agencés dans les portions formant bord latéral (11e) ayant un diamètre (Ce) plus petit que des diamètres (Cc) des câblés de carcasse (12) agencés dans la portion centrale (11c),
**caractérisé en ce que**
les diamètres des câblés de carcasse (12) agencés dans les portions formant bord latéral (11e) augmentent graduellement depuis le bord latéral (11et) jusqu'à la portion centrale (11c).

2. Bandage pneumatique (1) selon la revendication 1, dans lequel un rapport Cc/Ce des plus grands diamètres Cc et des plus petits diamètres Ce des câblés de carcasse (12) est dans une plage allant de 1,2 à 2,0.

3. Bandage pneumatique (1) selon la revendication 1 ou 2, dans lequel une moyenne des diamètres (Ce) de trois câblés de carcasse (12e) agencés les plus près de bords latéraux (11et) dans les portions formant bord latéral (11e) est plus petite qu'une moyenne des diamètres (Cc) des câblés de carcasse (12) autres que les trois câblés de carcasse (12e).

4. Bandage pneumatique (1) selon l'une quelconque des revendications 1 à 3, dans lequel
chacune des pièces de nappe (11) inclut une pluralité de câblés de carcasse (12) agencés dans au moins une des portions formant bord latéral (11e), et
des pas (Pe) entre les câblés de carcasse (12) agencés dans ladite au moins une des portions formant bord latéral (11e) sont plus grands que des pas (Pc) entre les câblés de carcasse (12) agencés dans la portion centrale (11c), dans lequel les pas (Pe, Pc) sont déterminés par des distances entre des centres de câblés (18) des câblés de carcasse (12) adjacents.

5. Bandage pneumatique (1) selon la revendication 4, dans lequel chacune des pièces de nappe (11) a les pas (Pe) entre les câblés de carcasse (12) agencés dans les deux portions des portions formant bord latéral (11e) plus grands que les pas (Pc) des câblés de carcasse (12) agencés dans la portion centrale (11c).

6. Bandage pneumatique (1) selon la revendication 4 ou 5, dans lequel une moyenne des pas (Pe) de trois câblés de carcasse (12e) agencés les plus près de bords latéraux (11et) des portions formant bord latéral (11e) est plus grande qu'une moyenne des pas (Pc) des câblés de carcasse (12) autres que les trois câblés de carcasse (12e).

7. Bandage pneumatique (1) selon l'une quelconque des revendications 4 à 6, dans lequel
les portions formant bord latéral (11e) incluent une pluralité de câblés de carcasse (12), et les pas (Pe) de ceux-ci diminuent graduellement depuis un bord latéral (11et) des portions formant bord latéral (11e) jusqu'à la portion centrale (11c).
